# EUROPEAN PATENT SPECIFICATION

(11) **EP 2 176 613 B1**
(45) Date of publication and mention of the grant of the patent: **11.07.2012**
(21) Application number: 07788329.6
(22) Date of filing: 09.08.2007
(51) Int. Cl.: F23G 5/44, C10J 3/74, F23G 5/48, C10J 3/00, F27D 7/06, F23G 5/027, F27B 7/36, F27B 7/34, F27B 7/28, F23G 5/20

(54) **HIGH-TEMPERATURE FURNACE WITH AN OXYGEN-FREE INFEED SECTION AND USE OF SYNGAS IN SUCH A FURNACE**
HOCHTEMPERATUROFEN MIT SAUERSTOFFFREIEM BESCHICKUNGSABSCHNITT UND VERWENDUNG VON SYNGAS IN SOLCH EINEM OFEN
FOUR HAUTE TEMPÉRATURE À SECTION D'ALIMENTATION EXEMPTE D'OXYGÈNE, ET UTILISATION DE SYNGAS DANS UN TEL FOUR

(30) Priority: 13.07.2007 WO PCT/EP2007/057265
(43) Date of publication of application: 21.04.2010
(73) Proprietor: Pyromex Holding AG, 6300 Zug (CH)
(72) Inventor: Jeney, Peter, 6300 Zug (CH)
(74) Representative: OK pat AG
(86) International application number: PCT/EP2007/058264
(87) International publication number: WO 2009/010100

(56) References cited:
- EP-A- 1 593 731
- WO-A-2007/121268
- DE-A1- 19 531 340
- US-A- 5 553 554
- US-A- 5 776 550
- US-A1- 2003 008 928

## Description

The invention relates to high-temperature furnaces and in particular to induction furnaces which are particularly suitable for the disposal or processing of carbon-containing material such as waste materials and/or biomass by continuous high temperature degradation, although they may be used in other applications, such as for example roasting of ores and minerals. The invention specifically relates to high-temperature furnaces having a special infeed section for continuously feeding material into said furnace.

Electrically powered furnaces in which heat is produced by electrical induction are well-known. The basic structure of such furnaces comprises an electrical coil within which is placed a susceptor.

An example of an inductive furnace is disclosed in the European patent EP 1495276 B1.

The passage of alternating electrical current through the coil produces heat in the susceptor which is used to heat the furnace. A preferred material for the susceptor theoretically would be graphite. In practical applications, like the present invention metals and in particular noble metals, are used. However, particularly at high temperatures, unprotected susceptors, no matter what materials are being used, are attacked by oxygen and thereby eroded and/or oxidized in use and therefore are unsuitable for use in a furnace for prolonged use at high temperatures unless oxygen is totally excluded from the furnace.

Attempts have been made to solve the problems caused by oxygen in the furnace, but it turned out that some of the carbon-containing materials which are typically processed by such furnaces do carry a certain amount of oxygen in itself. If this oxygen is released in the furnace, the walls or chamber may be destroyed. European patent application EP 1593731 discloses such a method of gasifying organic materials. United States patent 6863878 to Kleppler discloses furnace for producing synthesis gas from carbonaceous materials. This furnace uses a low temperature phase in the process so as to reduce the amount of oxygen within the feed material. Only after this low temperature stage is the temperature of the furnace increased to produce Syngas. Kleppler does not provide a thermal separation between the infeed section and the furnace which in case of a Syngas feedback could lead to uncontrolled reactions if the temperature at the infeed side is allowed to rise above 100°C. Furthermore this process appears to be inefficient due to the repeated heating / cooling off of the furnace.

The problem of oxygen attack may also be observed at the walls or chambers of other directly or indirectly heated furnaces or reactors, such as annealing furnaces or combustion furnaces which reach fairly high temperatures.

The present invention seeks to provide a furnace where no oxygen is able to enter the inner zone.

The present invention accordingly provides a susceptor, reactor or furnace wall or furnace chamber for processing carbon-containing material in a respective inner zone at a high-temperature where an atmosphere is provided which is essentially oxygen-free. The respective device comprises an infeed side, for continuously feeding the carbon-containing material into the inner zone, and an output side where a so-called Syngas is provided. The infeed side comprises an infeed section providing for an oxygen-free atmosphere. According to the present invention, the infeed section comprises a gas inlet being connectable to the output side in order to be able to feed some of said Syngas back into said infeed section, said infeed section further comprising a conveyor or worm for conveying said carbon-containing material, wherein the Syngas contains Carbonmonoxide and hydrogen, said hydrogen providing for a chemical reaction with oxygen residues of said carbon-containing material for removing oxygen from said carbon-containing material before it enters the inner zone. Furthermore the furnace comprises a feedback pipe for feeding some of said Syngas back into said infeed section.

In a preferred embodiment, the present invention provides a susceptor, reactor or furnace wall or furnace chamber wherein a protective structure is provided which comprises a molybdenum compound, respectively a molybdenum-based susceptor (e.g. a susceptor comprising a molybdenum alloy), and a Silicon-Boron (SiB) compound coating, respectively a Silicon-Boron-based coating layer. This protective structure prevents any oxygen damages inside the furnace if, despite the Syngas feedback, oxygen was able to enter the inner zone.

The present invention further provides the use of a susceptor, reactor or furnace with a Syngas feedback in the high-temperature continuous processing of carbon containing material such as waste materials, plants, wood, or high-temperature roasting of ores and minerals.

The present invention further relates to the use of carbonmonoxide and hydrogen containing Syngas for removing oxygen from a carbon-containing material to be processed by a high-temperature furnace, said furnace comprising an infeed side for continuously feeding said carbon-containing material into an inner zone, said infeed side comprising an infeed section, and an output side where Syngas is provided, characterized in that said infeed section comprises a gas inlet being connected to said output side through a feedback pipe feeding some of said Syngas into said infeed section; and oxygen is removed from said carbon-containing material to be processed in that hydrogen within the Syngas provides for a chemical reaction with oxygen residues of said carbon-containing material thereby the infeed section providing for an atmosphere being essentially oxygen-free.

The advantage of the Syngas feedback is that the Hydrogen of the Syngas will react with oxygen that is contained in the material which is to be processed in the furnace. Due to this reaction, the oxygen will be removed from the material before it enters the inner zone of the furnace.

It is another advantage of the Syngas feedback that the elevated temperature of the Syngas provides for a pre-heating of the material at the infeed side of the furnace.

The furnace presented herein can be used for the continuous processing of all sorts of carbon-containing materials, even if these materials should be chemically aggressive materials.

The susceptor, reactor or furnace will preferably be arranged to operate at a slight angle to the horizontal so that material fed through the furnace at its upper end is assisted by gravity to move to the lower end. To further assist the progress of the material, means are provided to rotate the susceptor, reactor or furnace about its main axis. Furthermore, the inner surface of the susceptor, reactor or furnace is preferably formed with one or more protrusions to assist progress of the material which is being heated, such protrusion or protrusions being preferably in the form of one or more helical flanges.

Regarding the use of refractory materials in the furnace, it will be appreciated that the whole of the revolving part of the furnace should be very adequately supported in order to prevent undue stresses in the refractory material. This is important since any undue stress may also affect the coating material.

The reactor or furnace is designed to be operated at elevated temperatures between 800° C and 1700° C, preferably above 1250° C.

One possible furnace, e.g. an induction furnace, of the invention will now be illustrated by way of example with reference to the accompanying drawing in which:
- Figure 1: is a vertical section of the infeed side of an induction furnace in accord with the present invention;
- Figure 2: is a vertical section of the main part of an induction furnace in accord with the present invention;
- Figure 3: is a cross-section of an inventive furnace;
- Figure 4: is a schematic top view of a furnace with several of the peripheral systems.

### Detailed Description

The present invention concerns high-temperature susceptors, reactors, furnaces and ovens. For the sake of simplicity, in the following, the word furnace is used as synonym for all the different kinds of high-temperature systems where the invention can be advantageously employed.

When referring to "high-temperatures" or "elevated temperatures", temperatures above 800° C and preferably above 1000° C are meant. In some applications, the temperature can reach 1700° C.

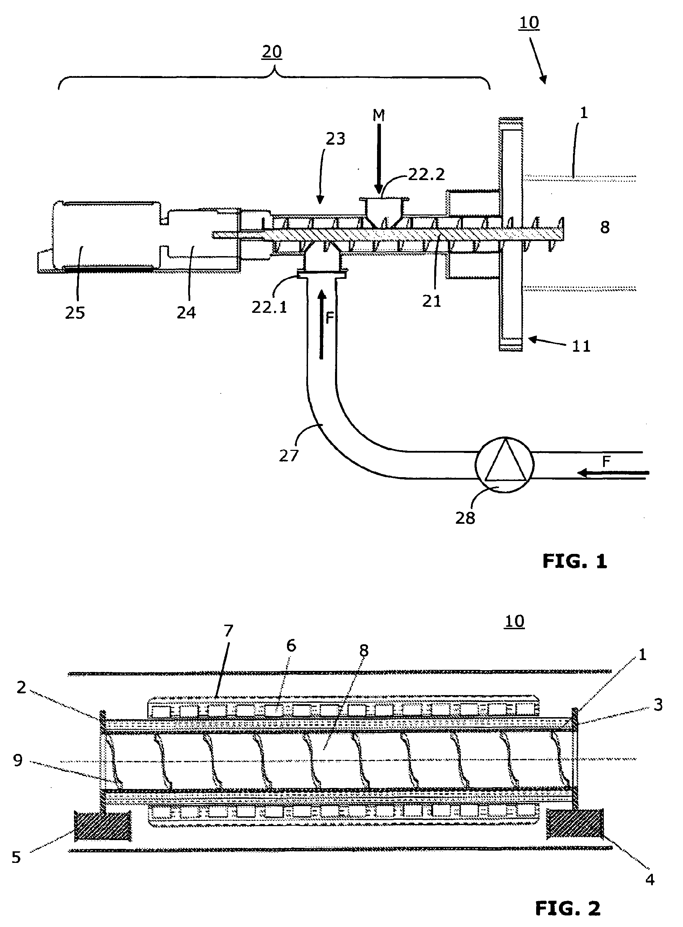

The input (infeed) side of a furnace 10 is shown in Fig. 1. The furnace itself comprises a cylinder 1 of a refractory material, e.g. a refractory alloy, having a length of approximately several meters (e.g. between 1 and 8 meters), an internal diameter of approximately 0.1 - 0.5 meters and an external diameter of approximately 0.12 - 0.52 meters, for instance. The cylinder 1 of the furnace 10 may be rotated about its horizontal axis by means of a spur gear 11.

The infeed side 20 comprises an infeed section 23 which is designed to provide for an oxygen-free atmosphere. According to the present invention, the infeed section 23 comprises a gas inlet 22.1 being connectable to an output side 30 of the furnace 10. This arrangement enables the feed back of some of the Syngas (also called synthesis gas; a gas comprising carbon monoxide (CO) and hydrogen (H₂)) into said infeed section 23.

As illustrated in Fig. 1, a feedback pipe 27 may be provided which connects the output side 30 of the furnace 10 with the infeed section 23. The flow of the Syngas inside the feedback pipe 27 is illustrated by two arrows F.

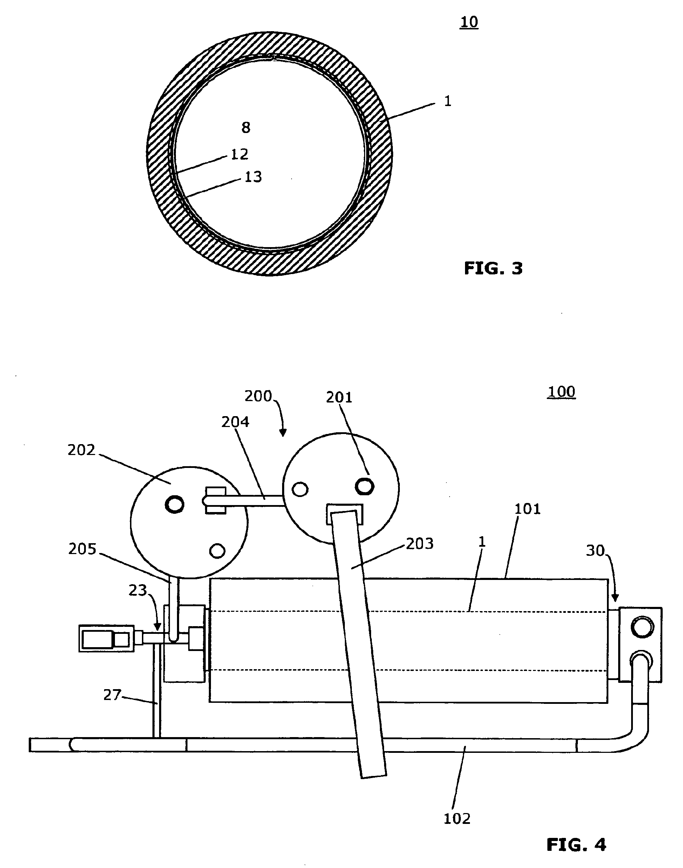

The carbon-containing material which is to be processed in the furnace 10 is conveyed by means of a conveyor or worm 21 (e.g. an auger feeder) from the left hand side of Fig. 1 to the right hand side. An engine 25 and a gear box 24 may be employed to rotate worm 21 or move the conveyor. As illustrated in Fig. 4, there are two connected containers 201 and 202 which contain the material to be processed. These two containers 201, 202 are sealed so that no or almost no oxygen is contained in these containers. Special gating means can be provided in order to provide for the necessary sealing. Conveyors (e.g. auger elevators) 203, 204, and 205 can be employed to move the material to be processed.

As illustrated in Fig. 1, the material may drop from above (see arrow M) through an inlet port 22.2 onto the conveyor 21 situated in said infeed section 23.

Well suited is a feed-system 200 with a series of containers 201, 202 and conveyors 203, 204, 205 operated with a nitrogen atmosphere in order to make sure that no or almost no oxygen enters the infeed section 23. Details of such a feed-system are illustrated in Fig. 4. Instead of nitrogen, also other inert gases (such as Argon) could be used.

"Inside" the infeed section 23, while the material M is being conveyed from the inlet port 22.2 towards the furnace 10, it is "attacked" by the Syngas. The Hydrogen of the Syngas reacts with oxygen residues contained or carried by the material M.

It is also possible to blow the gas from the top onto the material M in the infeed section 23 rather than blowing it into the infeed section 23 from below, as illustrated in Fig. 1.

The feedback pipe 27 may comprise a valve 28 in order to be able to switch the gas feedback on or off. If material M is processed that does not contain oxygen, then the feedback pipe 27 might be switched off by means of the valve 28.

In the furnace 10 exemplified in Fig. 2, the cylinder 1 is held between two annular end plates 2, 3. The structure may be positioned at a slight angle to the horizontal so that the plate 2 can be regarded as an upper end plate and the plate 3 can be regarded as the lower end plate. The cylinder 1 is held in position by two resistant rollers 4, 5, for instance.

Surrounding the cylinder 1 is an induction coil 6 having a length of approximately 2 meters, for instance, and a thickness of approximately 0.015 meters, for instance. The induction coil 6 may be encased in a steel cover 7 so that the system occupies a gas-tight space surrounding the furnace chamber which can be filled with nitrogen or other inert gases.

To assist the continuous movement of material M which is being heat-treated through the furnace chamber 8, a helical protrusion 9 is formed integrating with the internal surface of the cylinder 1. This helical protrusion 9 is optional.

The whole structure is mounted at each end on bearings (not shown in Fig. 2) to provide rotation, and rolling seals and airlocks (also not shown) are also fitted at both ends of the furnace. This ancillary equipment, along with the electrical circuitry of the induction heater and also the heat radiation detector means and related control equipment are all of a conventional nature and therefore need not be described in order to enable the skilled person to operate the new furnace structure of the invention. Only those elements of the ancillary equipment which are relevant for the present invention are described in connection with Fig. 4.

According to a first embodiment of the present invention, oxygen is prevented from entering the inner zone 8 of the furnace 10 by employing a Syngas feedback, as described above.

According to another embodiment of the present invention, a protective coating 12, 13 is applied or coated onto the inner part of the refractory material which is exposed to chemicals and/or oxygen, as schematically illustrated in Fig. 3. Fig. 3 shows a cross-section of an inventive furnace 10. The coating comprises a molybdenum compound 12, respectively a molybdenum-based layer 12 (e.g. a molybdenum alloy), and a Silicon-Boron compound 13, respectively a Silicon-Boron-based layer 13. This stack of two layers 12, 13 is applied or coated onto the inner wall of the furnace 10, since this portion of the wall might be exposed to chemicals and/or oxygen in case the Syngas feedback does not work as intended.

A molybdenum compound combined with a Silicon-Boron (Si-B) compound is very well suited for the purposes of the present invention.

The invention presented herein can be used with all furnaces which create Syngas. The Syngas is generated by the gasification (or high temperature degradation) of a carbon containing material, such as fuel, waste disposal, plants, wood, or residues etc. The Syngas is provided at an output side 30 of the furnace 10. The respective gas output 30 is illustrated in Figure 4. The details are not addressed herein, since it is common knowledge how to collect gas at the output side 30 of a furnace 10.

In Fig. 4 the whole system 100 is illustrated. The furnace 10 as such is situated inside a box 101. The infeed section 23 is on the right hand side. The output side 30 is on the left hand side of the box 101. The cylinder 1 is indicated by means of a dashed line. The feedback pipe 27 connects an output gas pipe 102 to the infeed section 23.

The whole system 100 may further comprise a feed-system 200 with a series of containers 201, 202 and conveyors 203, 204, 205 operated with a nitrogen atmosphere in order to make sure that no or almost no oxygen enters the infeed section 23. Details of such a feed-system are illustrated in Fig. 4. The conveyors 203, 204, 205 are preferably arranged at an angle so that the material is moved upwards until it drops into a container 201 or 202. The conveyor 205 moves the material upwards until it drops into the infeed section 23 where a horizontal conveyor 21 (cf. Fig. 1) feeds the material M into the furnace 10. The nitrogen pressure inside the feed-system 200 may be adjusted so that no, or almost no oxygen, enters the infeed section, except for the oxygen that may be contained in the material as such. This oxygen content is being removed by means of the inventive Syngas feedback.

In a preferred embodiment, the hydrogen feedback stream is adjusted depending on the amount of oxygen detected in the infeed section 23. It is advantageous to ensure that there is always more hydrogen than oxygen. An oxygen detector may be installed at the infeed section 23.

In a preferred embodiment, the Syngas at the gas inlet 22.1 has an elevated temperature, preferably a temperature above 100° C. This elevated temperature of the Syngas provides for a pre-heating of the carbon-containing material while passing through said infeed section 23.

It will be understood that many variations could be adopted based on the specific structure hereinbefore described without departing from the scope of the invention as defined in the following claims.

## Claims

1. A high-temperature furnace (10) for processing carbon-containing material in an inner zone (8) at a high-temperature, said furnace (10) comprising:
- an infeed side (20) for continuously feeding said carbon-containing material into said inner zone (8)
- and an output side (30) where a Syngas is provided,
**characterized in that:**
- said infeed side (20) comprises an infeed section (23) providing for an atmosphere being essentially oxygen-free, said infeed section (23) comprising a gas inlet (22.1) being connectable to said output side (30) for feeding some of said Syngas into said infeed section (23),
- said infeed section (23) further comprising a conveyor or worm (21) for conveying said carbon-containing material,
wherein said Syngas contains Carbonmonoxide and hydrogen, said hydrogen providing for a chemical reaction with oxygen residues of said carbon-containing material for removing oxygen from said carbon-containing material before it enters the inner zone (8); and wherein said furnace (10) comprises a feedback pipe (27) for feeding some of said Syngas back into said infeed section (23).

2. The furnace (10) as claimed in claim 1, comprising a control valve (28) for switching feedback of said Syngas on and off.

3. The furnace (10) as claimed in claim 1 or 2, wherein said Syngas at the gas inlet (22.1) has an elevated temperature, preferably a temperature at above 100° C, said elevated temperature of the Syngas providing for a pre-heating of said carbon-containing material while passing through said infeed section (23).

4. The furnace (10) as claimed in claim 1, wherein said infeed section (23) is decoupled from the atmosphere by feeding an inter gas into conveying means (203, 204, 205).

5. The furnace (10) as claimed in one of the claims 1 through 4, comprising a refractory material coated or protected at its inner side enclosing said inner zone (8) by means of a protective material.

6. The furnace (10) as claimed in claim 5, wherein said protective material comprises a molybdenum compound (12) and a Silicon-Boron (Si-B) compound (13).

7. The furnace (10) as claimed in claim 1 or 2, wherein the furnace is cylindrical in shape, the interior surface of the cylinder forming the lining of a furnace chamber defining said inner zone (8).

8. The furnace (10) as claimed in one of the preceding claims 1 through 7, comprising an induction heater (7).

9. Use of a furnace (10) as claimed in any one of the preceding claims 1 through 8 in the disposal or processing of said carbon-containing material in a continuous fashion.

10. The use of claim 9, wherein said carbon-containing material comprises one or more of the following: waste material, plants, wood, residues.

11. The use of claim 9, wherein an oxygen-free atmosphere is provided in said inner zone (8) and in said infeed section (23).

12. The use of claim 9, wherein temperatures above 800°C and preferably up to 1700°C are reached in said inner zone (8).

13. Use of Carbonmonoxide and hydrogen containing Syngas for removing oxygen from a carbon-containing material to be processed by a high-temperature furnace (10),
said furnace (10) comprising:
- an infeed side (20) for continuously feeding said carbon-containing material into an inner zone (8), said infeed side (20) comprising an infeed section (23),
- and an output side (30) where Syngas is provided;
**characterized in that:**
- said infeed section (23) comprises a gas inlet (22.1) being connected to said output side (30) through a feedback pipe (27) feeding some of said Syngas into said infeed section (23); and
- oxygen is removed from said carbon-containing material to be processed in that hydrogen within the Syngas provides for a chemical reaction with oxygen residues of said carbon-containing material thereby the infeed section (23) providing for an atmosphere being essentially oxygen-free.

## Patentansprüche

1. Ein Hochtemperaturofen (10) zum Verarbeiten von kohlenstoffhaltigem Material in einer inneren Zone (8) bei einer hohen Temperatur, wobei der Ofen (10) folgendes umfasst:
- eine Beschickungsseite (20) zum kontinuierlichen Beschicken des kohlenstoffhaltigen Materials in die innere Zone (8)
- und eine Ausbringungsseite (30), wo ein Synthesegas bereitgestellt wird, **dadurch gekennzeichnet, dass**
- die Beschickungsseite (20) einen Beschickungsabschnitt (23) umfasst, der eine im Wesentlichen sauerstofffreie Atmosphäre bereitstellt, wobei der Beschickungsabschnitt (23) einen mit der Ausbringungsseite (30) verbindbaren Gaseinlass (22.1) zum Zuführen eines Teils des Synthesegases in den Beschickungsabschnitt (23) umfasst,
- Beschickungsabschnitt (23)ferner eine Fördervorrichtung oder eine Schnecke (21) zum Fördern des kohlenstoffhaltigem Material umfasst,
wobei das Synthesegas Kohlenstoffmonoxid und Wasserstoff enthält, wobei der Wasserstoff eine chemische Reaktion mit Sauerstoffresten des kohlenstoffhaltigen Materials zum Entfernen von Sauerstoff aus dem kohlenstoffhaltigen Material bewirkt, bevor letzteres in die innere Zone (8) eintritt, und wobei der Ofen (10) ein Rückführungsrohr (27) zum Rückführen eines Teils des Synthesegases zurück in den Beschickungsabschnitt (23) umfasst.

2. Der Ofen (10) nach Anspruch 1, mit einem Steuerventil (28) zum Ein- und Ausschalten der Rückführung des Synthesegases.

3. Der Ofen (10) nach Anspruch 1 oder 2, wobei das Synthesegas an dem Gaseinlass (22.1) eine erhöhte Temperatur aufweist, vorzugsweise eine Temperatur oberhalb von 100°C, und wobei die erhöhte Temperatur des Synthesegases ein Vorwärmen des kohlenstoffhaltigen Materials während des Durchlaufs durch den Beschickungsabschnitt (23) bewirkt.

4. Der Ofen (10) nach Anspruch 1, wobei der Beschickungsabschnitt (23) von der Atmosphäre dadurch entkoppelt ist, dass ein Inter-Gas bzw. Zwischengas in Fördermittel (203, 204, 205) zugeführt wird.

5. Der Ofen (10) nach einem der Ansprüche 1 bis 4, mit einem Feuerfestmaterial, das an seiner die innere Zone (8) umschließenden Innenseite mittels eines Schutzmaterials beschichtet oder beschützt ist.

6. Der Ofen (10) nach Anspruch 5, wobei das Schutzmaterial eine Molybdänverbindung (12) und eine Silizium-Bor (Si-B)-Verbindung (13) enthält.

7. Der Ofen (10) nach Anspruch 1 oder 2, wobei der Ofen eine zylindrische Form aufweist, wobei die Innenoberfläche des Zylinders die Auskleidung einer die innere Zone (8) begrenzenden Ofenkammer ausbildet.

8. Der Ofen (10) nach einem der Ansprüche 1 bis 7, mit einer Induktionsheizeinrichtung (7).

9. Verwendung eines Ofens (10) nach einem der vorhergehenden Ansprüche 1 bis 8 bei der Entsorgung oder Verarbeitung von kohlenstoffhaltigem Material in einer kontinuierlichen Weise.

10. Die Verwendung nach Anspruch 9, wobei das kohlenstoffhaltige Material eines oder mehrere der folgenden umfasst: einen Abfallstoff, Pflanzen, Holz, Reststoffe.

11. Die Verwendung nach Anspruch 9, wobei in der inneren Zone (8) und in dem Beschickungsabschnitt (23) eine sauerstofffreie Atmosphäre bereitgestellt ist.

12. Die Verwendung nach Anspruch 9, wobei Temperaturen von mehr als 800°C and vorzugsweise bis zu 1700°C in der inneren Zone (8) erreicht werden.

13. Verwendung eines kohlenstoffmonoxidhaltigen und wasserstoffhaltigen Synthesegas zum Entfernen von Sauerstoff aus einem in einem Hochtemperaturofen (10) zu verarbeitenden kohlenstoffhaltigen Material, wobei der Ofen (10) folgendes umfasst:
- eine Beschickungsseite (20) zum kontinuierlichen Beschicken des kohlenstoffhaltigen Materials in die innere Zone (8), wobei die Beschickungsseite (20) einen Beschickungsabschnitt (23) umfasst,
- und eine Ausbringungsseite (30), wo ein Synthesegas bereitgestellt wird,
**dadurch gekennzeichnet, dass**
- der Beschickungsabschnitt (23) einen Gaseinlass (22.1) umfasst, der mit der Ausbringungsseite (30) durch ein Rückführungsrohr (27) verbunden ist, das einen Teil des Synthesegases in den Beschickungsabschnitt (23) zurückführt, und dass
- Sauerstoff aus dem zu verarbeitenden kohlenstoffhaltigen Material dadurch entfernt wird, dass der Wasserstoff in dem Synthesegas eine chemische Reaktion mit Sauerstoffresten des kohlenstoffhaltigen Materials bewirkt, wodurch der Beschickungsabschnitt (23) eine im Wesentlichen sauerstofffreie Atmosphäre bereitstellt.

## Revendications

1. Un four (10) haute température pour traiter du matériau carburé dans une zone intérieure, le four (10) comprenant:
- un côté d'alimentation (20) pour alimenter continuellement ledit matériau carburé dans ladite zone intérieure
- et un côté de production (30), où un gaz de synthèse et fourni, **caractérisé en ce que**
- ledit côté d'alimentation (20) comprend une section d'alimentation (23) fournissant une atmosphère essentiellement exempte d'oxygène, ladite section d'alimentation (23) comprenant une arrivée de gaz (22.1) connectable audit côté de production (30) pour alimenter une partie dudit gaz de synthèse dans la section d'alimentation (23),
- ladite section d'alimentation (23) comprend en outré un transporteur ou un vis sans fin (21) pour transporter ledit matériau carburé,
cependant ledit gaz de synthèse comprend de l'oxyde de carbone et du hydrogène, ledit hydrogène stipule une réaction chimique avec des résidus d'oxygène du matériau carburé pour enlever de l'oxygène du matériau carburé avant qu'il entre la zone intérieure (8), et ledit four (10) comprend un tuyau feed-back (27) pour donner une partie du gaz de synthèse en retour dans ladite section d'alimentation (23).

2. Le four (10) selon la revendication 1, comprenant une valve de contrôle (28) pour mettre en marche ou éteindre le feed-back dudit gaz de synthèse.

3. Le four (10) selon la revendication 1 ou 2, dans lequel à l'arrivée du gaz (22.1), ledit gaz du synthèse a une température élevée, préférablement une température au-dessus de 100°C, ladite température élevée du gaz de synthèse achève un préchauffage dudit matériau carburé en passant à travers ladite section d'alimentation (23).

4. Le four (10) selon la revendication 1, dans lequel ladite section d'alimentation (23) est découplée de l'atmosphère en alimentant un inter-gaz dans des moyens de transport (203, 204, 205).

5. Le four (10) selon quelques unes des revendications 1 à 4, comprenant un matériau réfractaire qui est couvert ou protégé à son côté intérieur clôturant ladite zone intérieure (8) par moyens d'un matériau protecteur.

6. Le four (10) selon la revendication 5, dans lequel le matériau protecteur comprend un composé de molybdène (12) et un composé de silicium et bore (Si-B) (13).

7. Le four (10) selon la revendication 1 ou 2, dans lequel le four a une forme cylindrique, cependant la surface intérieure forme un revêtement d'une chambre de four définissant ladite zone intérieure (8).

8. Le four (10) selon quelques unes des revendications 1 à 7, comprenant une chauffage d'induction (7).

9. Usage d'un four (10) selon quelques unes des revendications 1 à 8 dans l'élimination des déchets ou traitement du matériau carburé dans une façon continue.

10. L'usage selon la revendication 9, dans lequel ledit matériau carburé comprend un ou plusieurs des suivants: un matériau de récupération, des plantes, du bois, des résidus.

11. L'usage selon la revendication 9, dans lequel une atmosphère exempte d'oxygène est fournit dans ladite zone intérieure (8) et dans ladite section d'alimentation (23).

12. L'usage selon la revendication 9, dans lequel des températures au-dessus de 800°C et préférablement jusqu'à 1700°C sont atteintes dans ladite zone intérieure (8).

13. Usage d'un gaz de synthèse contenant du monoxyde de carbone et d'hydrogène pour enlever d'oxygène d'un matériau carburé à traiter par un four (10) haute température,
ledit four (10) comprenant:
- un côté d'alimentation (20) pour alimenter continuellement ledit matériau carburé dans ladite zone intérieure, ledit côté d'alimentation (20) comprenant une section d'alimentation (23),
- et un côté de production (30), où un gaz de synthèse et fourni,
**caractérisé en ce que**
- ladite section d'alimentation (23) comprend une arrivée de gaz (22.1) connectée audit côté de production (30) à travers un tuyau feed-back (27) pour alimenter une partie dudit gaz de synthèse dans ladite section d'alimentation (23), et
- d'oxygène est enlevé du matériau carburé à traiter **en ce que** d'hydrogène contenu dans le gaz de synthèse stipule une réaction chimique avec des résidus d'oxygène du matériau carburé, ainsi la section d'alimentation (23) fourni une atmosphère essentiellement exempte d'oxygène.
